Europäisches Patentamt

European Patent Office

Office européen des brevets

(11) Veröffentlichungsnummer: **0 121 207**
**A2**

(12) **EUROPÄISCHE PATENTANMELDUNG**

(21) Anmeldenummer: **84103307.9**

(22) Anmeldetag: **26.03.84**

(51) Int. Cl.³: **B 29 F 1/10**

(30) Priorität: **05.04.83 DE 3312231**

(43) Veröffentlichungstag der Anmeldung:
**10.10.84 Patentblatt 84/41**

(84) Benannte Vertragsstaaten:
**DE FR GB IT**

(71) Anmelder: **BAYER AG**
**Konzernverwaltung RP Patentabteilung**
**D-5090 Leverkusen 1 Bayerwerk(DE)**

(72) Erfinder: **Schauf, Dieter, Ing. grad.**
**Am Sonnenhang 29**
**D-5653 Leichlingen 2(DE)**

(54) Hohlkörper aus Kunststoffen.

(57) Komplizierte Hohlkörper mit Hinterschneidungen
und/oder mehreren mensionalen Krümmungen, die nicht ein
Ziehen der Kerne aus dem Fertigteil erlauben, werden aus
vorgefertigten Schalen 1 unter gleichzeitiger exakter Formgebung zusammengepresst und an den Stoßstellen durch
spritzgegossenen Kunststoff 4 verbunden.

FIG. 3

0121207

BAYER AKTIENGESELLSCHAFT        5090 Leverkusen, Bayerwerk

Konzernverwaltung RP
Patentabteilung

Hohlkörper aus Kunststoffen

Die Erfindung betrifft ein Verfahren zur Herstellung von Hohlkörpern aus Kunststoffen mit insbesondere sich mindestens teilweise innen erweiternder Kontur und/oder axial gekrümmtem Hohlraum.

Im Automobilbau werden für Motoren Ansaugkrümmer aus Al-Legierungen verwendet, die wegen der komplizierten Führung der Luft unter sehr beengten Raumverhältnissen bisher nur im Kokillengußverfahren hergestellt werden konnten.

Die Herstellung dieser Ansaugkrümmer ist sehr aufwendig, da für jedes zu gießende Stück neue Kerne hergestellt und vor dem Gießen in die heiße Form eingelegt werden müssen. Die komplizierten Gußformen stellen darüber hinaus hohe Anforderungen an den Gießer und das Material. Insbesondere ist die Oberfläche der Innenwandung der Lüftungskanäle oft unerwünscht rauh, wodurch Leistungsminderung bei den Motoren eintritt. Auch sind

Le A 22 300 - Ausland

die gegossenen Dichtflächen im Anschlußbereich maßlich nicht hinreichend genau, so daß im allgemeinen eine teure spanabhebende Bearbeitung nachgeschaltet werden muß. Oft weist auch das Gußstück eine Porosität auf, die nach dem Einbau wegen Ansaugen von Falschluft zu Störungen des Motors führen kann. Bei diesem Massenprodukt ist deshalb ein verhältnismäßig hoher Ausschuß nicht zu vermeiden, der darüber hinaus noch eine teure Qualitätskontrolle (z.B. jeder Ansaugkrümmer muß abgedrückt werden) zur Folge hat.

Weiter ist ein Ansaugkrümmer aus Kunststoff bekannt, der in einem Schuß gespritzt wird, wobei die verlorenen Kerne z.B. aus niedrigschmelzenden Wismutlegierungen (z.B. 138°C) oder wasserlöslichen Salzen anschließend entfernt werden.

Alle Kunststoff-Ansaugkrümmer, die mit verlorenem Kern hergestellt werden, haben den Nachteil, daß neben der teuren Kernherstellung und -handhabung das spätere Entfernen einen zusätzlichen Arbeitsgang erfordert. Weiter ist ein Verzug der meist komplizierten Ansaugkrümmer aus verstärktem Kunststoff durch Molekül- und Faserorientierung nicht zu vermeiden, so daß üblicherweise eine mechanische Nachbearbeitung an den Flanschen erfolgen muß, die sehr teuer ist.

Der Erfindung liegt die Aufgabe zugrunde, ein Gehäuseteil, dessen Innenraum sich vom Zugang her erweitert und/oder nach einer bzw. mehreren Seiten ausgelenkt ist, zu finden, das einfach herzustellen ist, eine hohe Form-

Le A 22 300

genauigkeit im endgültigen Zustand besitzt, eine hohe
Dichtigkeit aufweist, strömungstechnisch günstig mit
geringem Materialaufwand zu gestalten ist und trotzdem
hohe Festigkeit besitzt.

Die Aufgabe wird erfindungsgemäß dadurch gelöst, daß mindestens zwei vorgefertigte Schalen in warmen Zustand zu einem Hohlkörper unter gleichzeitiger exakter Formvorgabe an den Stößen zusammengepreßt werden, die dann durch einen unter Spritzgießen zugesetzten Kunststoff verbunden werden.

Durch das Verfahren ist es möglich, auch komplizierte räumliche Hohlkörper, wie beispielsweise mehrfach gekrümmte, hinterschnittene Ansaugkrümmer von Automobilen oder mit hinterschnittenen Hohlräumen, in einzelnen Schalen nach technisch bewährten Verfahren herzustellen, um diese dann nach dem Zusammenfügen durch Spritzgießen erschmolzenen Kunststoff zu verbinden. Durch das Zusammenpressen der Schalen mittels aufgebrachter äußerer Kräfte kann erstens der Verzug, der bei mehrdimensionalen Spritzgußteilen leicht auftritt, ausgeglichen werden und zweitens eine Formung bzw. Nachformung der Schalen erfolgen, so daß die aus hydraulischen oder pneumatischen Gründen geforderten Abmessungen exakt einzuhalten sind. Dieser Vorteil wird noch dadurch unterstützt, daß einzelne Schalen fertigungstechnisch mit sehr glatter Oberfläche herzustellen sind, wodurch bei Nutzung ein geringer Strömungswiderstand und damit eine günstige Strömung erzielt wird. Da die Verbindung aus spritzgegossenem Kunststoff kraft- und/oder formschlüssig sich entlang eines Teiles oder des ganzen Stoßes erstrecken

Le A 22 300 - Ausland

kann, ist sowohl von der Festigkeit als auch von der Dichtigkeit her jede spezifische Anforderung mit wirtschaftlichem Aufwand zu erfüllen.

In einer speziellen Durchführung des Verfahrens werden die Kräfte für das Zusammenpressen und Formen im Übergangsbereich der an die Schalen anschließenden Flansche eingeleitet und die Flansche mindestens teilweise durch den mittels Spritzgießen aufgebrachten Kunststoff ummantelt.

Durch das Einleiten der Kräfte an dieser günstigen Stelle im Übergangsbereich von Schale und Flansch können einerseits die einzelnen Bauteile zum Spritzgießen in Form und Lage gerichtet werden und andererseits bieten die vorstehenden Flansche dem Werkzeug einen günstigen Ansatzpunkt mit verhältnismäßig freier Gestaltung der Verbindung.

In einer speziellen Durchführung des Verfahrens werden Verbund- oder Mehrfachschalen eingesetzt, von denen mindestens einige durch mittels Spritzgießen aufgebrachten Kunststoff zu einem Hohlkörper verbunden werden.

Dieses Verfahren erlaubt die verschiedensten Wandkonstruktionen. Ohne großen Mehraufwand können Funktion und Werkstoff entsprechend den jeweiligen Erfordernissen optimal ausgewählt werden, wobei über das Spritzgußverfahren sowohl eine starre Verbindung der gegenüberliegenden Schalen als auch der Schalen untereinander zu erzielen ist, die wiederum linear oder unterbrochen ausgeführt werden kann.

Le A 22 300

0121207

Der Hohlkörper, der nach dem vorgenannten Verfahren hergestellt wird, zeichnet sich dadurch aus, daß mindestens zwei hohlraumbildende, ausgerichtete Schalen an den Stößen durch einen spritzgegossenen Kunststoff verbunden sind.

Durch den im Spritzgießverfahren aufgebrachten Kunststoff können die Schalen kraft- und/oder formschlüssig sicher verbunden werden, wobei die Verbindung z.B. als luft- bzw. wasserdichte Naht oder auch nur aus einzelnen Fixierungspunkten bestehen kann. Außerdem ist sie sichtbar oder unsichtbar (d.h. zwischen den Stoßflächen) ausführbar. Weiter können für Schalen und Naht entsprechend den Erfordernissen auch verschiedene Kunststoffe verwendet werden.

In einer besonderen Ausführungsform besitzen die Schalen Flansche, die am freien Rand ganz oder teilweise mit spritzgegossenem Kunststoff umgeben sind.

Durch das Ummanteln der Flansche mit spritzgegossenem Kunststoff,beispielsweise mit einer Stärke von 1 - 4 mm,entsteht eine klammerartige Befestigung, die insbesondere durch einen Randwulst in ihrer Wirkung noch verbessert werden kann.Ein weiterer wichtiger Vorteil besteht darin,daß auch die Montageflansche für die Anschlüsse im selben Arbeitsgang mitumspritzt werden können, wodurch die gewünschte Planparallelität für den Anschluß erzielt wird, so daß sich die sonst übliche mechanische Nachbearbeitung erübrigt. Weiter können auch bei dünnen Schalen durch Nute, Vorsprünge bzw. Dichtungen im Bereich der Flansche die Verbindungen noch sicherer gestaltet werden.

Le A 22 300

In einer anderen Ausführungsform ist über spritzgegossenem Kunststoff mindestens in einem Bereich der Stöße eine kraftschlüssige Verbindung zwischen beiden Flanschen vorhanden.

Durch Ausspritzen des oder der Ausnehmungen zwischen zwei sich gegenüberliegenden Flanschen kann eine kraftschlüssige lineare oder punktweise Verbindung hergestellt werden.

In einer möglichen Ausführungsform sind laminierte oder zusammengesetzte Schalen durch einen spritzgegossenen Kunststoff mindestens teilweise miteinander verbunden.

Durch die Anordnung von mehreren hintereinander angeordneten Schalen kann manchmal den speziellen Erfordernissen der Gebrauchsgegenstände besser Rechnung getragen werden. So ist es möglich, einen korrosionsfesten Werkstoff, z.B. Metall, als innere Schale zu verwenden, während die äußere Schale aus besonders tragfähigem Kunststoff besteht. Auch können die Schalen mit Abstand zueinander angeordnet werden, um vielleicht einen zusätzlichen Kühlkanal zu gewinnen. Bei der Ausführungsform gibt es viele Ausgestaltungen, wobei über den spritzgegossenen Kunststoff sowohl eine Abdichtung wie auch eine Fixierung erzielt werden kann.

In einer weiteren Ausführungsform sind die Stöße der Schalen zusätzlich abgedichtet.

Durch Auftragen von Klebstoffen, Mittel zum Anlösen (Ameisensäure) und Silikonen kann auch bei extremen Unterschieden des inneren und äußeren Gasdruckes eine hohe Dichtigkeit erzielt werden.

In einer Ausführungsform ist der spritzgegossene Kunststoff verschiedener Stöße mindestens teilweise untereinander verbunden.

Le A 22 300

Durch Spritzgießen beispielsweise eines Netzwerkes ist es möglich, die Kräfte der Flanschnähte teilweise gegeneinander aufzuheben und die Schalenkonstruktion zu verstärken.

Besonders geeignet ist die Mehrschalen-Konstruktion für Massen-Bauteile, die bei für Kunststoff geeigneten Temperaturen komplizierte Formen aufweisen und formhaltig sein müssen. Der Werkstoff kann entsprechend den jeweiligen Erfordernissen der einzelnen Teile ausgewählt werden. Besonders bewährt haben sich als Werkstoffe , insbesondere mit Verstärkung aus Glasfaser:

Polyamid                                    (PA 66-GF)
                                            (PA  6-GF)

ungesättigte Polyester                      (UP-GF)
                                            (nach SMC- oder ZMC-
                                                    Verfahren)*

thermoplastische Polyester
Polybutylenterephthalat                     (PBTP-GF)
Polyethylenterephthalat                     (PETP-GF)

Polyphenylensulfid                          (PPS-GF)

* SMC = sheet moulding compound
  ZMC = Z moulding compound .

Le A 22 300-Ausland

Beispiele der Erfindung sind in den Zeichnungen dargestellt und werden im folgenden näher erläutert. Es zeigen:

Fig. 1    Schalenflansche mit seitlicher Spritzgießnaht

Fig. 2    Schalenflansche mit innerer Spritzgießnaht

Fig. 3    Schalenflansche mit klammerförmiger Spritzgießnaht

Fig. 4    Flansch mit Spritzgießabdeckung

Fig. 5    Flansch mit Spritzgießabdeckung und Zunge

Fig. 6    Flansch mit verlängerter Spritzgießabdeckung

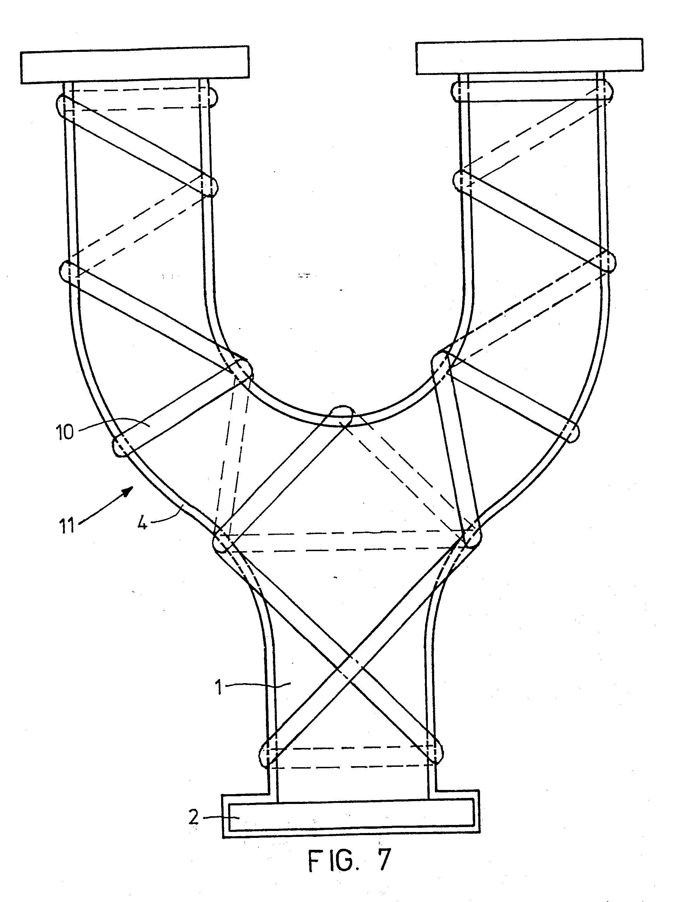

Fig. 7    Hohlkörper mit Netzwerk


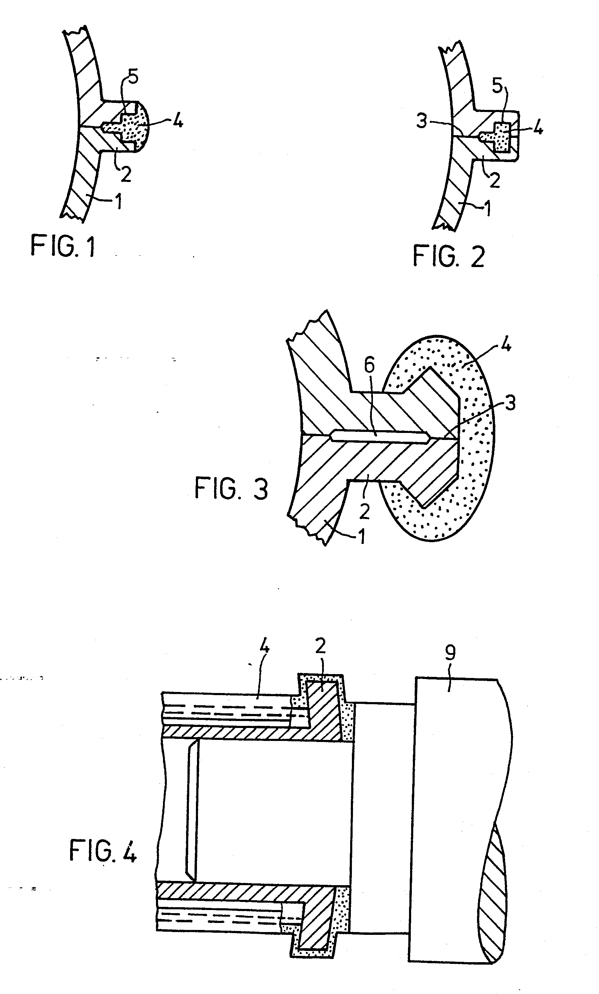

In Fig. 1 sind zwei Schalen 1 über Flansche 2 im Stoß 3
durch Spritzgießen erzeugten Kunststoff 4 unter Anschmelzen des Kunststoffes der Schale 1 kraftschlüssig
miteinander verbunden, wobei dieser aus einer zweifach
abgesetzten Naht besteht.

In Fig. 2 besitzen die Schalen 1 entlang des Randes je
einen Flansch 2, welche untereinander durch einen in
Ausnehmung 5 durch Spritzgießen eingepreßten Kunststoff 4 verbunden sind.


Le A 22 300

Fig. 3 zeigt zwei Schalen 1 mit Flanschen 2, die außen durch Spritzgießen eines Kunststoffes 4 klammerartig den wiederhakenartig verbreiterten Rand umfassen. Der Zwischenraum zwischen Kunststoff 4 und Schale 1 dient zum Aufbringen der Kräfte durch ein dort angreifendes Werkzeug, wobei die satte Anlage der Stöße 3 durch den umlaufenden Nut 6 erleichtert wird.

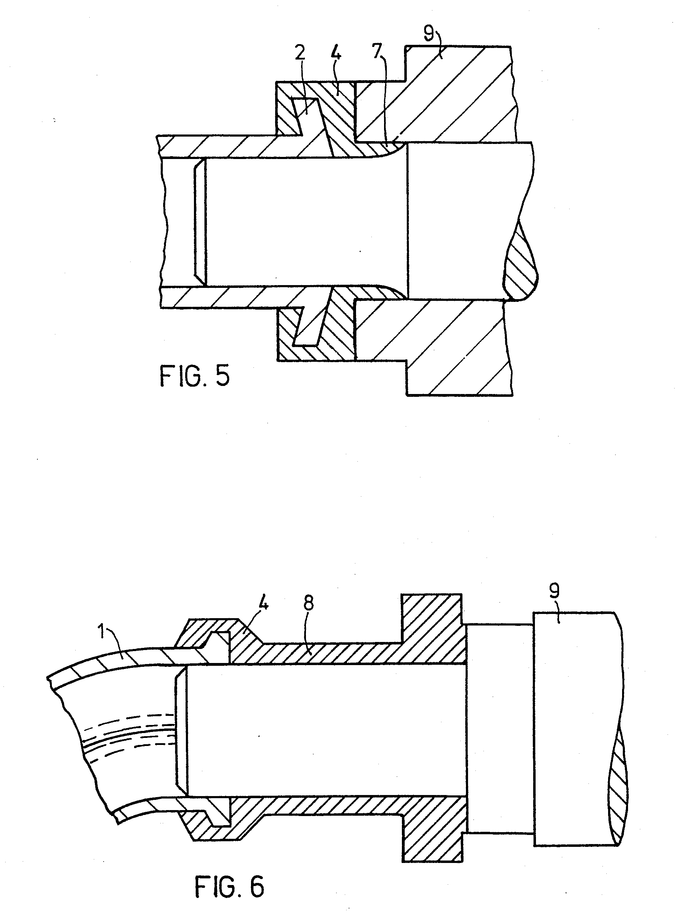

In Fig. 4 bis 6 ist der durch Kunststoff umspritzte Flansch 2 der Schale 1 dargestellt, wobei deutlich die verzogene Lage des Flansches 2 vom vorgefertigten Teil zu erkennen ist. In Fig. 5 ist gleichzeitig eine Dichtungszunge 7 und in Fig. 6 ein Übergangsteil 8 durch Spritzgießen angeformt, welches wiederum ein Metallteil 9 aufnimmt.

In Fig. 6 ist ein Hohlkörper 10 dargestellt, bei dem die Verbindungen der Stöße 3 aus Kunststoff 4 über ein Netzwerk 11 aus gleichem Kunststoff verbunden sind.

Le A 22 300

Patentansprüche

1) Verfahren zur Herstellung von Hohlkörpern aus Kunststoffen mit inbesondere sich mindestens teilweise innen erweiternder Kontur und/oder axial gekrümmtem Hohlraum,
dadurch gekennzeichnet, daß mindestens zwei vorgefertigte Schalen (1) zu einem Hohlkörper unter
gleichzeitiger exakter Formvorgabe an den Stößen
(3) zusammengepreßt werden, die dann durch einen
unter Spritzgießen zugesetzten Kunststoff (4) verbunden werden.

2) Verfahren zur Herstellung von Hohlkörpern nach
Anspruch 1, dadurch gekennzeichnet, daß die Kräfte für das Zusammenpressen und Formen im Übergangsbereich der an die Schalen anschließenden
Flansche (2) eingeleitet und die Flansche (2)
mindestens teilweise durch den mittels Spritzgießen aufgebrachten Kunststoff (4) ummantelt werden.

3) Verfahren zur Herstellung von Hohlkörpern nach
Ansprüchen 1 und 2, dadurch gekennzeichnet, daß
Verbund- oder Mehrfachschalen eingesetzt werden,
von denen mindestens einige durch den mittels
Spritzgießen aufgebrachten Kunststoff (4) zu
einem Hohlkörper verbunden werden.

4) Hohlkörper aus Kunststoff mit mindestens teilweise
sich innen erweiternder Kontur und/oder axial gekrümmtem Hohlraum, dadurch gekennzeichnet, daß
mindestens zwei hohlraumbildende, ausgerichtete

Le A 22 300 - Ausland

Schalen (1) an den Stößen (3) durch einen spritzgegossenen Kunststoff (4) verbunden sind.

5) Hohlkörper aus Kunststoff nach Anspruch 4, dadurch
gekennzeichnet, daß die Schalen (1) Flansche (2)
besitzen, die am freien Rand ganz oder teilweise
mit spritzgegossenem Kunststoff (4) umgeben sind.

6) Hohlkörper aus Kunststoff nach Ansprüchen 4 und 5,
dadurch gekennzeichnet, daß über spritzgegossenem
Kunststoff (4) mindestens in einem Bereich der
Stöße (3) eine kraftschlüssige Verbindung zwischen
beiden Flanschen (2) vorhanden ist.

7) Hohlkörper aus Kunststoff nach Ansprüchen 4 bis 6,
dadurch gekennzeichnet, daß laminierte oder zusammengesetzte Schalen (1) durch einen spritzgegossenen Kunststoff (4) mindestens teilweise miteinander
verbunden sind.

8) Hohlkörper aus Kunststoff nach Ansprüchen 4 bis 7,
dadurch gekennzeichnet, daß die Stöße (3) der Schalen (1) zusätzlich abgedichtet sind.

9) Hohlkörper aus Kunststoff nach Ansprüchen 4 bis 8,
dadurch gekennzeichnet, daß der spritzgegossene
Kunststoff (4) verschiedener Stöße (3) mindestens
teilweise untereinander verbunden ist.

Le A 22 300

FIG. 1

FIG. 2

FIG. 3

FIG. 4

FIG. 5

FIG. 6

FIG. 7